(19) Europäisches Patentamt
European Patent Office
Office européen des brevets

(11) **EP 1 510 422 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
***B60R 25/04*** *(2006.01)*      ***B60R 25/06*** *(2006.01)*

(21) Anmeldenummer: **03103223.8**

(22) Anmeldetag: **26.08.2003**

(54) **System und Verfahren zur Leistungseinschränkung eines Kraftfahrzeugs**

System and method for power limitation in a vehicle

Sytème et procédé pour limiter la puissance d'un véhicule

(84) Benannte Vertragsstaaten:
**DE FR GB**

(43) Veröffentlichungstag der Anmeldung:
**02.03.2005 Patentblatt 2005/09**

(73) Patentinhaber: **Ford Global Technologies, LLC.**
**Dearborn MI 48126 (US)**

(72) Erfinder:
• **Eifert, Mark**
**52070, Aachen (DE)**

• **Rienks, Maurice**
**6291 CJ, Vaals (NL)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**DE-A- 4 431 070**      **DE-A- 19 842 544**
**US-A- 5 816 358**

**Beschreibung**

Die Erfindung betrifft ein System zur Leistungseinschränkung eines Kraftfhrzeugs mit einem Fahrzeugsteuergerät, das zumindest eine Funktionseinheit steuert, die einen Verbrennungsmotor und einen Generator aufweist, wobei dem Fahrzeugsteuergerät eine Authentifizierungseinheit zugeordnet ist, die ein Authentifizierungsmerkmal überprüft und bei fehlendem oder falschem Authentifizierungsmerkmal den Betrieb der Funktionseinheit zumindest einschränkt. Die Erfindung betrifft aber auch ein Verfahren zur Leistungseinschränkung eines Kraftfahrzeugs mit einem Fahrzeugsteuergerät, das zumindest eine Funktionseinheit steuert, die einen Verbrennungsmotor und einen Generator aufweist, wobei einer Authentifizierungseinheit bei falschem oder fehlendem Authentifizierungsmerkmal den Betrieb der Funktionseinheit einschränkt.

Die gattungsbildende DE 44 31 070 A1 betrifft eine Anordnung zur zugangscodegesteuerten Benutzungseinschränkung eines Kraftfahrzeuges mit elektronisch steuerbaren Komponenten, bei welcher in einem Zuordnungsspeicher eine benutzungseinschränkende Zuordnungsvorschrift von Steuerungsparametern der elektronisch steuerbaren Komponenten zu jedem zulässigen Zugangscode gespeichert ist und eine Steuereinheit, die Komponenten nach Maßgabe der gespeicherten Zuordnungsvorschrift und des eingegebenen Zugangscodes steuert.

Die DE 198 42 544 A1 offenbart eine Vorrichtung zur Bestimmung der Fahrberechtigung eines Fahrzeuges mit einer Biometriedatenerfassung, die Biometriedaten eines Benutzers erfaßt und als Biometriesignal einer Auswerteeinheit zuführt, mit zumindest einem Biometrieprofilspeicher, in dem zumindest ein Biometrieprofil hinterlegt ist. Eine Berechtigungsfreigabe zur Nutzung von Funktionen des Fahrzeugs erfolgt dann, wenn das Biometriesignal und das Biometrieprofil übereinstimmen. Die Berechtigungsfreigabe erfolgt auch dann, wenn ein von einer Codeerfassung erfaßtes Betriebsmittelsignal mit einem Betriebsmittelcode übereinstimmt.

Die US 2001/0004029 A1 betrifft ein Steuergerät für ein Hybridfahrzeug mit einem Verbrennungsmotor zur Erzeugung einer Antriebskraft, einem elektrischen Motor um eine Kraft zu generieren, welche die Leistungsabgabe des Motors unterstützt, die abhängig von den Betriebsbedingungen ist, und mit einer Energiespeichereinheit zum Speichern elektrischer Energie, die von dem Motor generiert wurde, der wie ein Generator wirkt indem die Leistungsabgabe des Motors und die elektrische Energie benutzt werden wenn das Fahrzeug abbremst. Das Steuergerät weist einen Geschwindigkeitsbegrenzer, einen Generierungsanlasser und eine Generierungswerteinstellvorrichtung auf. Der Motor generiert die elektrische Energie, die von dem Generierungswert abhängig ist.

Die US 6,202,776 B1 offenbart ein Antriebssystem für ein Kraftfahrzeug mit einem Verbrennungsmotor als Antriebsaggregat, einer direkt mit einer Triebwelle gekoppelten oder koppelbaren elektrischen Maschine, und wenigstens einem Wechselrichter. Der Wechselrichter weist einen Zwischenkreis auf, der ein gegenüber dem elektrischen Bordsystem erhöhtes Spannungsniveau aufweist. In dem elektrischen Bordsystem ist eine Energiespeichervorrichtung zum Speichern von elektrischer Energie angeordnet. Auf dem erhöhten Spannungsniveau des Zwischenkreises ist eine weitere Energiespeichereinheit zum Speichern elektrischer Energie angeordnet. Das Antriebssystem weist zudem eine automatische Start-Stop-Steuerung auf, in deren Rahmen das Antriebssystem durch die elektrische Maschine gesteuert wird.

Ein Hauptnachteil bei bekannten Kraftfahrzeugen, insbesondere bei Sportwagen oder hochmotorisierten Kraftfahrzeugen ist darin zu sehen, daß die Leistungsabgabe des Verbrennungsmotors jederzeit vollständig zur Verfügung steht. Die Leistungsabgabe steht auch dann vollständig zur Verfügung wenn unberechtigte Benutzer, wie z.B. Parkwächter, die unter Umständen auf Wunsch der berechtigten Person das Kraftfahrzeug einparken oder ausparken oder Kinder der berechtigten Person das Kraftfahrzeug fahren. Hierbei wird zunehmend beobachtet, daß die unberechtigten Benutzer die Gelegenheit ausnutzen und rücksichtslos die volle Leistungsentfaltung des Kraftfahrzeugs abrufen. Hierdurch können erhebliche Schäden an dem Kraftfahrzeug entstehen.

Der vorliegenden Erfindung liegt die Aufgabe zugrunde, ein verbessertes Kraftfahrzeug zur Verfügung zu stellen, das in einfacher Weise aber effizient eine rücksichtslose Benutzung durch Unberechtigte ausschließt.

Erfindungsgemäß wird die Aufgabe dadurch gelöst, daß bei falschem oder fehlendem Authentifizierungsmerkmal ein Steuersignal an den Generator geleitet wird, so daß dieser einen hohen elektrischen Strom generiert, der zumindest einen Teil der Leistung des Verbrennungsmotors absorbiert.

Wenn das Kraftfahrzeug gestartet wird, verlangt die Authentifizierungseinheit die Eingabe des Authentifizierungsmerkmals. Wird kein oder nicht das richtige Authentifizierungsmerkmal erkannt oder eingegeben, schränkt die Authentifizierungseinheit den Betrieb der Funktionseinheit ein, indem die Leistungsabgabe des Verbrennungsmotors abgebremst wird.

Zur Überprüfung des Authentifizierungsmerkmals weist die Authentifizierungseinheit herkömmliche Speicherelemente auf. Authentifizierungsmerkmale können beispielhaft Schlüsselcodes, Stimmenerkennungssysteme oder andere geeignete Mittel sein, die den berechtigten Benutzer oder andere, ausgewählte Personen erkennen.

Bei richtigem, falschem oder fehlendem Authentifizierungsmerkmal sendet die Authentifizierungseinheit ein entsprechendes Authentifizierungssignal an das Fahrzeugsteuergerät. Hierzu weist das Fahrzeugsteuergerät übliche Speicherelemente auf. Mittels des von der Authentifizierungseinheit erhaltenen Signals erzeugt das Fahrzeugsteuergerät ein Steuersignal. Das Steuersignal steuert den Verbrennungsmotor und bevorzugt den Generator. Bei richtigem Authentifizierungsmerkmal steht die Leistungsabgabe vollständig zur Verfügung.

Der Generator kann ein Anlaßgenerator oder in Hybridfahrzeugen eine elektrische Maschine sein, die von dem Fahrzeugsteuergerät jeweils derart angesteuert wird, daß diese einen hohen elektrischen Strom generieren. Die Erzeugung des elektrischen Stroms absorbiert einen hohen Betrag eines von dem Verbrennungsmotor erzeugten Drehmoments, indem ein zum Drehmoment des Verbrennungsmotors entgegengesetztes Drehmoment in dem Generator erzeugt wird. Die beiden entgegengesetzten Drehmomente wirken direkt auf eine Triebwelle des Kraftfahrzeugs. Damit wird die abgegeben Leistung des Verbrennungsmotors bei falschem oder fehlendem Authentifizierungsmerkmal reduziert. Der Generator wirkt somit quasi als Motorbremse.

Aber auch bei laufendem Motor kann der berechtigte Benutzer mit geeigneten Mitteln dafür Sorge tragen, daß eine rücksichtlose Benutzung ausgeschlossen wird, indem z.b. ein Authentifizierungsmerkmal eingegeben wird, das ein entsprechendes Steuersignal erzeugt, wodurch das Antriebsaggregat abgebremst wird. Möglich ist auch, daß das Authentifizierungsmerkmal bewußt falsch eingegeben wird, oder das richtige Authentifizierungsmerkmal vorübergehend gelöscht wird.

Weitere vorteilhafte Ausgestaltungen sind in den Unteransprüchen und in der folgenden Figurenbeschreibung offenbart. Es zeigt:

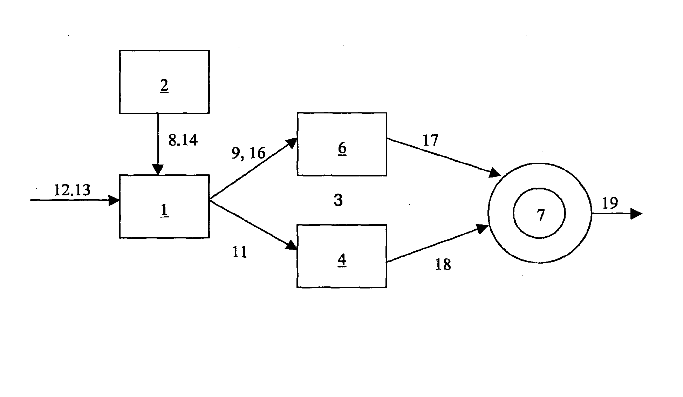

Fig. 1 eine Prinzipdarstellung zur Leistungsbegrenzung.

Die einzige Figur zeigt ein nicht dargestelltes Kraftfahrzeug mit einem Fahrzeugsteuergerät 1. Dem Fahrzeugsteuergerät 1 ist eine Authentifizierungseinheit 2 zugeordnet, wobei das Fahrzeugsteuergerät 1 eine Funktionseinheit 3 steuert. Die Funktionseinheit 3 weist einen Verbrennungsmotor 4 und einen Generator auf. In dem dargestellten Ausführungsbeispiel weist das Kraftfahrzeug einen parallelen Hybridantrieb mit einer üblichen elektrischen Maschine 6 als Generator auf. Sowohl der Verbrennungsmotor 4 als auch die elektrische Maschine 6 wirken direkt auf eine Kurbelwelle 7.

Die Authentifizierungseinheit 2 ist über einen Datenpfad 8 mit dem Fahrzeugsteuergerät 1 verbunden. Das Fahrzeugsteuergerät 1 ist zum einen mittels des Datenpfades 9 mit der elektrischen Maschine 6 und zum anderen mittels des Datenpfades 11 mit dem Verbrennungsmotor 4 verbunden.

Mittels des Pfeils 12 wird ein Eingangssignal 13 dargestellt. Das Eingangssignal 13 wird von einem Benutzer des Kraftfahrzeugs über ein Gaspedal erzeugt und dem Fahrzeugsteuergerät 1 in üblicher Weise zugeleitet. Das Eingangssignal 13 stellt eine verlangte Kurbelwellenleistung $M_{verl.}$ dar.

Die Authentifizierungseinheit 2 verlangt die Eingabe eines Authentifizierungsmerkmals durch den Benutzer des Kraftfahrzeugs. Sofern die Authentifizierungseinheit 2 von dem Benutzer ein falsches oder kein Authentifizierungsmerkmal erhält, sendet die Authentifizierungseinheit 2 ein Authentifizierungssignal 14 entlang des Datenpfades 8 in das Fahrzeugsteuergerät 1. In diesem wird ein Steuersignal 16 erzeugt, das die elektrische Maschine 6 veranlaßt einen hohen elektrischen Strom zu generieren. Damit wird an der Kurbelwelle 7 ein zum Drehmoment des Verbrennungsmotors 4 entgegengesetztes Drehmoment erzeugt. Somit werden das Beschleunigungspotenzial und eine maximale Geschwindigkeit des Kraftfahrzeugs begrenzt. Erhält die Authentifizierungseinheit 2 dagegen das richtige Authentifizierungsmerkmal, wird die Leistung des Verbrennungsmotors 4 nicht begrenzt. In einem solchen Fall werden die elektrische Maschine 6 und der Verbrennungsmotor 4 derart angesteuert, daß die verlangte Kurbelwellenleistung zur Verfügung gestellt wird. Dies läßt sich anhand der folgenden Formel darstellen:

$$M_{Kurbelwelle} = M_E + M_{CE} = M_{verl.}$$

Hierbei bedeutet:

| | |
|---|---|
| $M_{Kurbelwelle}$ | kombiniertes Drehmoment von Verbrennungsmotor und elektrischer Maschine |
| $M_E$ | Drehmoment des Verbrennungsmotors 4 |
| $M_{CE}$ | Drehmoment der elektrischen Maschine 6 |
| $M_{verl.}$ | Verlangte Kurbelwellenleistung |

In der Figur ist $M_E$ mit dem Bezugszeichen 17, $M_{CE}$ mit dem Bezugszeichen 18 und $M_{Kurbelwelle}$ mit dem Bezugszeichen 19 bezeichnet.

Bei falschem oder fehlendem Authentifizierungsmerkmal wird die Leistung des Verbrennungsmotors nach folgender Formel begrenzt:

$$M_{Kurbelwelle} = M_E + M_{CE} = \alpha * M_{verl.}$$

mit $0 < \alpha < 1$. Der Faktor $\alpha$ stellt hierbei einen Begrenzungsbetrag der vollständig zur Verfügung stehenden Leistung dar. Der Betrag von $\alpha$ ist in dem Fahrzeugsteuergerät 1 frei wählbar eingebbar und jederzeit von der berechtigten Person veränderbar. Bei eingegebenen Faktor $\alpha$ ist lediglich ein Teil der verlangten Kurbelwellenleistung erreichbar.

Die Kurbelwellenleistung kann aber auch auf einen vorgegebenen maximal Wert $M_{Max.}$ begrenzt werden. Dies läßt sich wie folgt darstellen:

$$M_{Kurbelwelle} = \begin{cases} M_{verl.}, & M_{verl.} < M_{Max} \\ M_{Max}, & M_{verl} \geq M_{Max} \end{cases}$$

Damit wird in einfacher Weise aber effizient eine rücksichtslose Benutzung des Kraftfahrzeugs ausgeschlossen.

Selbstverständlich kann die elektrische Maschine 6 auch ein zum Drehmoment des Verbrennungsmotors 4 gleichgerichtetes Drehmoment erzeugen. Die elektrische Maschine 6 unterstützt dabei den Verbrennungsmotor 4.

**Patentansprüche**

1. System der Leistungseinschränkung eines Kraftfahrzeugs mit einem Fahrzeugsteuergerät (1), das zumindest eine Funktionseinheit (3) steuert, die einen Verbrennungsmotor (4) und einen Generator (6) aufweist, wobei dem Fahrzeugsteuergerät (1) eine Authentifizierungseinheit (2) zugeordnet ist, die ein Authentifizierungsmerkmal überprüft und bei fehlendem oder falschem Authentifizierungsmerkmal den Betrieb der Funktionseinheit (3) zumindest einschränkt **dadurch gekennzeichnet, daß** bei falschem oder fehlendem Authentifizierungsmerkmal ein Steuersignal (16) an den Generator (6) derart geleitet wird, daß dieser einen hohen elektrischen Strom generiert, der zumindest einen Teil der Leistung des Verbrennungsmotors (4) absorbiert.

2. Verfahren zur Leistungseinschränkung eines Kraftfahrzeugs insbesondere nach Anspruch 1 mit einem Fahrzeugsteuergerät (1) das zumindest eine Funktionseinheit (3) steuert, die einen Verbrennungsmotor (4) und einen Generator (6) aufweist, wobei eine Authentifizierungseinheit (2) bei falschem oder fehlendem Authentifizierungsmerkmal den Betrieb der Funktionseinheit (3) einschränkt, **dadurch gekennzeichnet, daß** bei falschem oder fehlendem Authentifizierungsmerkmal ein Steuersignal (16) an den Generator (6) geleitet wird, so daß dieser einen hohen elektrischen Strom generiert, der zumindest einen Teil der Leistung des Verbrennungsmotors (4) absorbiert.

3. Verfahren nach Anspruch 2, **dadurch gekennzeichnet, daß** die Authentifizierungseinheit (2) ein Authentifizierungssignal (14) an das Fahrzeugsteuergerät (1) leitet, das das Steuersignal (16) an die Funktionseinheit (3) zur Steuerung des Generators (6) leitet.

4. Verfahren nach Anspruch 2 oder 3, **dadurch gekennzeichnet, daß** der Generator (6) ein zum Drehmoment des Verbrennungsmotors (4) entgegengesetztes Drehmoment erzeugt, die beide derart auf eine Kurbelwelle (7) wirken, daß die Leistung des Verbrennungsmotors (4) reduziert wird und der Generator (6) als Motorbremse wirkt.

**Claims**

1. System for restricting the power of a motor vehicle having a vehicle control device (1), which controls at least one functional unit (3) which has an internal combustion engine (4) and a generator (6), an authentication unit (2) being assigned to the vehicle control device **(1),** which unit checks an authentication feature and when the authentication feature is absent or incorrect it at least restricts the operation of the functional unit (3), **characterized in that**, when the authentication feature is incorrect or missing, a control signal (16) is transmitted to the generator (6) in such a way that the latter generates a high electrical current which absorbs at least some of the power of the internal combustion engine (4).

2. Method for restricting the power of a motor vehicle, in particular according to Claim 1, having a vehicle control device (1) which controls at least one functional unit (3) which has an internal combustion engine (4) and a generator (6), an authentication unit (2) restricting the operation of the functional unit (3) when the authentication feature is incorrect or missing, **characterized in that**, when the authentication feature is incorrect or missing, a control signal (16) is transmitted to the generator (6) so that the latter generates a high electrical current which absorbs at least some of the power of the internal combustion engine (4).

3. Method according to Claim 2, **characterized in that** the authentication unit (2) transmits an authentication signal (14) to the vehicle control device (1) which transmits the control signal (16) to the functional unit (3) to control the generator (6).

4. Method according to Claim 2 or 3, **characterized in that** the generator (6) generates a torque which is opposed to the torque of the internal combustion engine (4), which torques act on a crankshaft (7) in such a way that the power of the internal combustion engine (4) is reduced and the generator (6) acts as an engine brake.

**Revendications**

1. Système de limitation de la puissance d'un véhicule automobile, qui présente un appareil (1) de commande du véhicule qui commande au moins une unité fonctionnelle (3) qui présente un moteur à combustion interne (4) et une génératrice (6), une unité d'authentification (2) étant associée à l'appareil (1) de commande du véhicule et vérifiant une caractéristique d'authentification pour au moins limiter le fonctionnement de l'unité fonctionnelle (3) en cas d'absence de caractéristique d'authentification ou de caractéristique d'authentification erronée, **caractérisé en ce qu'**en cas d'absence de caractéristique d'authentification ou de caractéristique d'authentification erronée, un signal de commande (16) est transmis à la génératrice (6) de telle sorte que cette dernière crée un courant électrique élevé qui absorbe au moins une partie de la puissance du moteur à combustion interne (4).

2. Procédé de limitation de la puissance d'un véhicule automobile, en particulier selon la revendication 1, qui présente un appareil (1) de commande du véhicule qui commande au moins une unité fonctionnelle (3) qui présente un moteur à combustion interne (4) et une génératrice (6), une unité d'authentification (2) étant associée à l'appareil (1) de commande du véhicule et vérifiant une caractéristique d'authentification pour au moins limiter le fonctionnement de l'unité fonctionnelle (3) en cas d'absence de caractéristique d'authentification ou de caractéristique d'authentification erronée, **caractérisé en ce qu'**en cas d'absence de caractéristique d'authentification ou de caractéristique d'authentification erronée, un signal de commande (16) est transmis à la génératrice (6) de telle sorte que cette dernière crée un courant électrique élevé qui absorbe au moins une partie de la puissance du moteur à combustion interne (4).

3. Procédé selon la revendication 2, **caractérisé en ce que** l'unité d'authentification (2) envoie un signal d'authentification (14) à l'appareil (1) de commande du véhicule qui transmet le signal de commande (16) à l'unité fonctionnelle (3) pour commander la génératrice (6) .

4. Procédé selon les revendications 2 ou 3, **caractérisé en ce que** la génératrice (6) crée un couple de rotation opposé au couple de rotation du moteur à combustion interne (4), les deux couples agissant sur un vilebrequin (7) de telle sorte que la puissance du moteur à combustion interne (4) soit réduite et que la génératrice (6) agisse comme frein moteur.